# EUROPÄISCHE PATENTSCHRIFT

(11) **EP 1 055 359 B1**
(45) Veröffentlichungstag und Bekanntmachung des Hinweises auf die Patenterteilung: **04.02.2004**
(21) Anmeldenummer: 00110004.9
(22) Anmeldetag: 12.05.2000
(51) Int. Cl.: A01D 41/14, A01D 57/20, A01D 69/03

(54) **Gerät zum Anbau an ein Trägerfahrzeug**
Apparatus for mounting on a carrier vehicle
Appareil pour le montage sur véhicule de support

(30) Priorität: 27.05.1999 US 321072
(43) Veröffentlichungstag der Anmeldung: 29.11.2000
(73) Patentinhaber: DEERE & COMPANY, Moline, Illinois 61265-8098 (US)
(72) Erfinder: Killen, Dale H., Port Byron, IL 61274 (US); Kmoch, David Walter, Geneseo, IL 61254 (US); Teller, Thomas G., Faribault, MN 55021 (US)
(74) Vertreter: Holst, Sönke, Dr.

(56) Entgegenhaltungen:
- EP-A- 0 478 940
- WO-A-93/05641
- CA-A- 1 130 577
- DE-A- 3 708 550
- DE-A- 19 639 217
- US-A- 4 308 713
- US-A- 5 350 020
- US-A- 5 791 128

## Beschreibung

Die Erfindung betrifft einen Gerät zum Anbau an ein Trägerfahrzeug, insbesondere einen Vorsatz für eine Erntemaschine, mit einem ersten hydraulischen Motor, der einen mit einem hydraulischen System der Erntemaschine verbindbaren Einlass und einen Auslass aufweist, wie aus dem Dokument US 5 350 020 bekannt.

Mit einem Fördergurt versehene Schneidwerke für Erntemaschinen, wie Mähdrescher, haben einen breiten, flachen Gurt, der auch als Fördertuch oder -band bezeichnet wird, um Erntegut zu transportieren. Die Anordnung und Anzahl der Fördergurte unterscheidet sich bei verschiedenen Schneidwerkstypen. Eine Art von Schneidwerk mit Fördergurt weist zwei seitliche Fördergurte auf, die Erntegut in seitlicher Richtung zur Mitte des Schneidwerks fördern, wo ein mittiger Fördergurt das Erntegut in seiner Längsrichtung in den Schrägförderer eines Mähdreschers fördert. Jeder der Fördergurte wird durch einen hydraulischen Antriebsmotor angetrieben.

Zusätzlich zum Antrieb der Fördergurte wird bei Schneidwerken mit Fördergurten ein weiterer hydraulischer Motor zum Rotationsantrieb einer Haspel oberhalb eines Mähwerksbalkens verwendet, um Erntegut gegen das Mähwerk zu drücken und es auf die Fördergurte zu bewegen. Hydraulische Hebezylinder werden verwendet, um die Haspel anzuheben und abzusenken, und auch, um die Haspel relativ zum Mähwerksbalken in Vorwärts- und Rückwärtsrichtung zu bewegen.

Ein konventioneller Mähdrescher umfasst ein hydraulisches System mit Anschlüssen zum Antrieb der Haspel des Schneidwerks und Verbindungen zum Betrieb der Zylinder zum Anheben der Haspel und der Zylinder zum Verschieben der Haspel in Vorwärtsund Rückwärtsrichtung. Zusätzlich zu den hydraulischen Anschlüssen für das Schneidwerk umfasst der Mähdrescher eine Leistungsabnahmeeinrichtung (PTO, Power Take Off) für eine mechanische Antriebsverbindung. Die Leistungsabnahmeeinrichtung wird typischerweise verwendet, um den Mähwerksbalken des Schneidwerks und Schneckenförderer zur Förderung des Ernteguts anzutreiben, falls das Schneidwerk damit ausgestattet ist.

Mähdrescher haben in der Regel keine zusätzlichen hydraulischen Leistungsanschlüsse, um die Motoren zum Antrieb des Fördergurts zu betreiben. Daher müssen andere Vorkehrungen getroffen werden, um hydraulische Leistung zu diesem Zweck bereitzustellen. Eine Möglichkeit ist, am Schneidwerk ein komplettes hydraulisches System bereitzustellen, das eine Getriebepumpe umfasst, die von der Leistungsabnahmeeinrichtung des Mähdreschers angetrieben wird. Dieser Ansatz erfordert, dass das hydraulische System des Schneidwerks mit einem Reservoir, einem Filter und einer Kühleinrichtung ausgerüstet wird. Dadurch wird das Schneidwerk mit beträchtlichen Kosten, Gewicht und Komplexität beaufschlagt. Außerdem ist die Wellengeschwindigkeit der Leistungsabnahmeeinrichtung typischerweise niedriger als für den effizienten Betrieb einer Getriebepumpe nötig ist.

Eine zweite Möglichkeit besteht darin, zusätzliche Pumpkapazität seitens des Mähdreschers bereitzustellen, und dabei die bestehende Hydraulik des Mähdreschers zu verwenden, um die Antriebsmotoren der Fördergurte anzutreiben. Ein Hauptnachteil dieses Ansatzes ist die Notwendigkeit signifikanter Änderungen bereits vorhandener Mähdrescher, wie auch der Bedarf an einem weiteren Satz hydraulischer Schläuche und Kupplungen zwischen dem Mähdrescher und dem Schneidwerk.

Die der Erfindung zugrunde liegende Aufgabe wird darin gesehen, ein hydraulisches System für ein abnehmbares Gerät, beispielsweise ein Schneidwerk mit einem Fördergurt, bereitzustellen, bei dem keine Änderungen an bereits bestehenden hydraulischen Systemen des Trägerfahrzeugs, wie einem Mähdrescher, notwendig sind, und bei dem nicht die Nachteile eines auf dem Gerät vorgesehenen kompletten hydraulischen Systems, wie zusätzlicher Kosten, Gewicht und Komplexität in Kauf zu nehmen sind.

Diese Aufgabe wird erf indungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das erfindungsgemäße Hydrauliksystems des Geräts verwendet eine am Gerät angebrachte Hydraulikpumpe, die mit vom ersten hydraulischen Motor zurücklaufender Hydraulikflüssigkeit versorgt wird. Das Hydrauliksystem verwendet die bereits vorhandene hydraulische Verbindung vom Trägerfahrzeug zum Gerät, um den ersten hydraulischen Motor anzutreiben. Hydraulikflüssigkeit vom Trägerfahrzeug treibt den ersten hydraulischen Motor an und wird dann (zumindest teilweise) der Hydraulikpumpe zugeführt. Diese stellt einen hinreichenden Hydraulikflüssigkeitsfluss bereit, um den zweiten Hydraulikmotor anzutreiben.

Auf diese Weise erhält man ein hydraulisches System des Geräts, das keine zusätzliche Leitung zum Trägerfahrzeug erfordert, um den zweiten hydraulischen Motor mit hinreichend hohem Druck anzutreiben. Ein vollständiges hydraulisches System des Geräts erübrigt sich.

Die vom zweiten hydraulischen Motor zurücklaufende Flüssigkeit kann zumindest teilweise in einen Rücklaufanschluss des hydraulischen Systems des Trägerfahrzeugs geleitet werden. Denkbar ist außerdem, wenigstens einen Teil dieser Flüssigkeit wieder dem Einlass der Pumpe zuzuführen. Die Drehzahl des ersten hydraulischen Motors ist in der Regel durch eine Variation des Flusses der ihn durchströmenden Hydraulikflüssigkeit variierbar. Im oberen Geschwindigkeitsbereich des ersten hydraulischen Motors reicht der Hydraulikflüssigkeitsfluss in der Regel aus, den Bedarf der Pumpe zu erfüllen. In diesem Fall wird die vom zweiten hydraulischen Motor stammende Flüssigkeit sofort zum Trägerfahrzeug zurückgeführt. Am unteren Ende des Geschwindigkeitsbereichs könnte der vom ersten hydraulischen Motor kommende Fluss nicht ausreichend sein, den ganzen Bedarf der Pumpe zu erfüllen, so dass ein Teil der vom zweiten hydraulischen Motors zurückströmenden Hydraulikflüssigkeit in das Antriebssystem des zweiten hydraulischen Motors zurück verbracht wird, anstelle gleich zum Trägerfahrzeug zurückgeführt zu werden.

Vorzugsweise ist am Gerät eine Verteilereinrichtung vorgesehen, die mit dem Auslass des ersten hydraulischen Motors, dem Einlass der Pumpe, dem Auslass des zweiten hydraulischen Motors und einem zum hydraulischen System des Trägerfahrzeugs führenden Anschluss ausgestattet ist. Die Verteilereinrichtung stellt eine vorzugsweise passive Mischkammer dar, die die einzelnen Flüsse der Hydraulikflüssigkeit zweckmäßig und selbsttätig aufteilt.

Bevorzugt ist, durch die Pumpe mehrere zweite hydraulische Motore zu versorgen, die in Reihe geschaltet sein können.

Zur Einstellung der Geschwindigkeit des zweiten hydraulischen Motors dient vorzugsweise ein verstellbarer Flussteiler, mit dem der Fluss der dem zweiten hydraulischen Motor zugeführten Hydraulikflüssigkeit einstellbar ist. Die vom Flussteiler stammende, überschüssige Hydraulikflüssigkeit wird zweckmäßigerweise wieder der Verteilereinrichtung zugeführt. Der Flussteiler kann von der Kabine des Trägerfahrzeugs - insbesondere elektrisch durch einen Schalter - fernsteuerbar sein.

In einer bevorzugten Ausführungsform sind die Anschlüsse der Verteilereinrichtung derart konfiguriert, dass die Pumpe ihre Hydraulikflüssigkeit vorrangig vom Auslass des ersten hydraulischen Motors erhält, und nur vom zweiten hydraulischen Motor zurückkehrende Hydraulikflüssigkeit aufnimmt, die die Pumpe bereits durchströmt hat, wenn es nötig ist. Die Verwendung der vom ersten hydraulischen Motor kommenden Hydraulikflüssigkeit, die durch den zweiten Motor und zurück zur Verteilereinrichtung geführt wird, hat den Vorteil, dass übermäßige Hitzeentwicklung in der Hydraulikflüssigkeit nicht zu befürchten ist. Bei einer derartigen Konfiguration ist der zur Pumpe führende Anschluss der Verteilereinrichtung zwischen dem mit dem ersten hydraulischen Motor verbundenen Anschluss der Verteilereinrichtung und dem mit dem Rücklauf zum hydraulischen System des Trägerfahrzeugs verbundenen (bzw. verbindbaren) Anschluss der Verteilereinrichtung angeordnet. Der Rücklauf vom zweiten hydraulischen Motor ist dann vorzugsweise zwischen dem Anschluss der Pumpe und dem Anschluss des Rücklaufs zum Trägerfahrzeug an der Verteilereinrichtung angeschlossen.

In einer bevorzugten Ausführungsform der Erfindung treibt der erste hydraulische Motor die Haspel eines Schneidwerks an. Der zweite hydraulische Motor kann einen Fördergurt des Schneidwerks antreiben.

Der mechanische Antrieb der am Gerät angeordneten Pumpe kann vom Trägerfahrzeug aus durch eine mechanische Kraftübertragungseinrichtung erfolgen.

Als Pumpe des hydraulischen Systems wird vorzugsweise ein Motor "Geroler" der T-Serie der Fa. Eaton verwendet. Dieser Motor wurde wegen seiner Kennlinie, die bei geringer Geschwindigkeit ein hohes Drehmoment bereitstellt, als Pumpe ausgewählt. Außerdem arbeitet dieser Motor bei den niedrigen Wellengeschwindigkeiten, die an einem Schneidwerk verfügbar sind, effizienter als eine Getriebepumpe. Der Gegendruck des Mähdreschers, der am Auslass des ersten hydraulischen Motors vorliegt, stellt einen positiven Druck am Einlass des als Pumpe dienenden Motors bereit. Daher ist es kein Problem, dass der Motor der T-Serie nicht in der Lage ist, Hydraulikflüssigkeit anzusaugen. Der Motor der T-Serie wurde außerdem ausgewählt, da die Dichtung der Welle hohen Drücken bis zu etwa 100 hPa (1500 psi) widerstehen kann. Der hohe Gegendruck des Mähdreschers ist für die meisten Getriebepumpen ungeeignet.

Obwohl die vorliegende Erfindung für ein Schneidwerk eines Mähdreschers entwickelt wurde, das einen Fördergurt aufweist, kann das erfindungsgemäße hydraulische System in anderen Anwendungsfällen benutzt werden, in denen ein Gerät an ein Trägerfahrzeug angebracht ist und ein oder zwei hydraulische Motoren verwendet, wobei ein Motor durch eine Verbindung mit einem hydraulischen System des Trägerfahrzeugs angetrieben wird. Andere Verwendungen können landwirtschaftliche Traktoren und Geräte, wie auch Baufahrzeuge mit abnehmbaren Geräten umfassen. Sie kann auch an einem Feldhäcksler mit einem Maisvorsatz verwendet werden, der mehrere antreibbare Einrichtungen, wie Mäh- und/oder Förderelemente etc., aufweist.

In den Zeichnungen ist ein nachfolgend näher beschriebenes Ausführungsbeispiel der Erfindung dargestellt. Es zeigt:
- Fig. 1: eine Ansicht eines Schneidwerks mit Fördergurt, das ein erfindungsgemäßes hydraulisches System aufweist, welches an einen konventionellen Mähdrescher gekoppelt ist;
- Fig. 2: ein Hydraulikschaltschema, dass das erfindungsgemäße hydraulische System zeigt, welches an das hydraulische System des Mähdreschers gekoppelt ist; und
- Fig. 3: eine Ansicht der im erfindungsgemäßen Hydrauliksystem verwendeten Verteilereinrichtung.

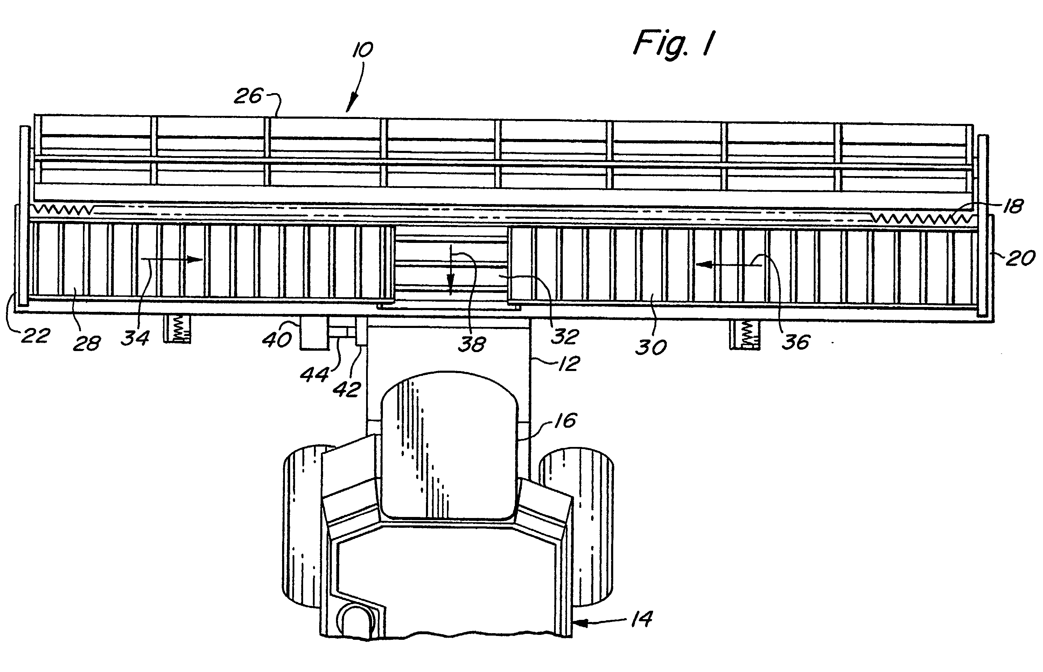

Das erfindungsgemäße Hydrauliksystem ist im mit Fördergurt ausgestatteten Schneidwerk 10, das in Figur 1 gezeigt ist, verwirklicht. Das Schneidwerk 10 ist am Schrägförderer 12 eines landwirtschaftlichen Mähdreschers 14 angebracht. Der Mähdrescher 14 umfasst einen Bedienerarbeitsplatz 16 in Form einer Kabine. Das Schneidwerk 10 umfasst einen Mähwerksbalken 18, voneinander beabstandete Seitenwände 20, 22 und eine Rückwand 24. Eine Haspel 26 dreht sich oberhalb des Mähwerksbalkens 18, um das stehende Erntegut gegen den Mähwerksbalken 18 zu drücken und das abgeschnittene Erntegut auf die Fördergurte zu bewegen. Das Schneidwerk 10 ist mit drei Fördergurten ausgestattet, seitlichen Fördergurten 28 und 30 und einem mittigen Fördergurt 32. Die zwei seitlichen Fördergurte 28, 30 bewegen Erntegut seitlich zur Mitte des Schneidwerks 10, wie durch die Pfeile 34 bzw. 36 angedeutet wird. Der mittige Fördergurt 32 fördert Erntegut nach hinten in den Schrägförderer 12, wie durch den Pfeil 38 gezeigt wird.

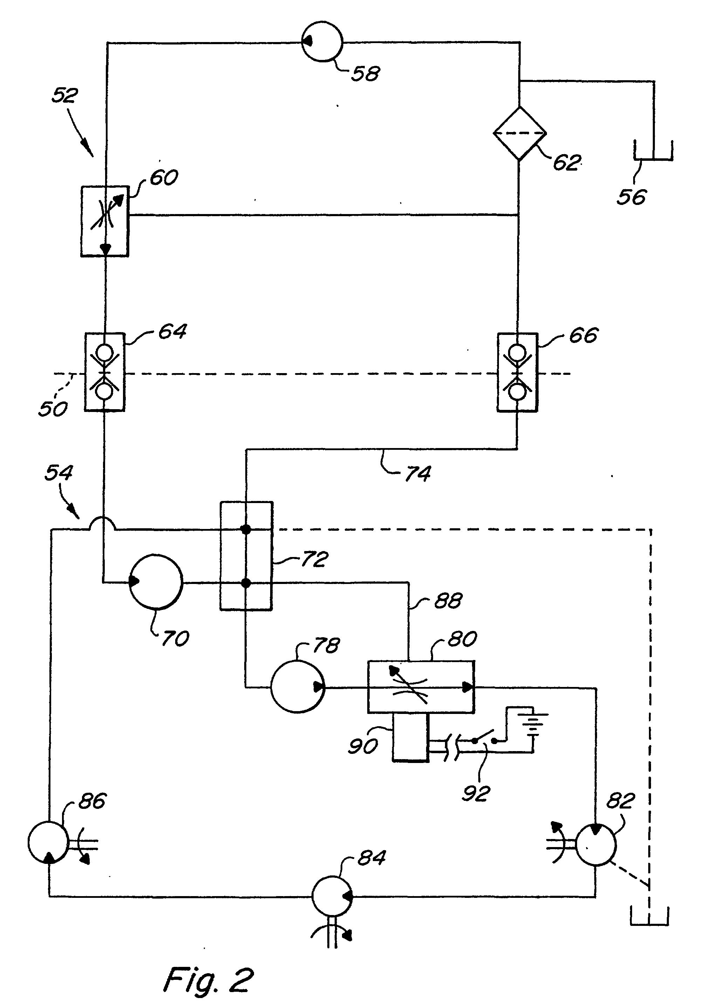

Ein Getriebe 40 des Schneidwerks 10 ist mit der Leistungsabnahmeeinrichtung (PTO) 42 des Schrägförderers 12 durch eine Antriebswelle 44 gekoppelt. Das Getriebe 40 ist durch eine (nicht gezeigte) Welle in für Schneidwerke von Ernteeinrichtungen konventioneller Art und Weise mit einer Antriebseinrichtung zum Antrieb des Mähwerksbalkens 18 verbunden. Das Getriebe 40 ist auch mit der Fördergurtantriebspumpe 78 verbunden, die im Schaltschema der Figur 2 gezeigt ist.

In der Figur 2 ist das erfindungsgemäße hydraulische System des Schneidwerks 10, wie auch ein Teil des hydraulischen Systems des Mähdreschers 14 gezeigt. Das hydraulische System des Mähdreschers 14 ist oberhalb der gestrichelten Linie 50 dargestellt und insgesamt mit dem Bezugszeichen 52 gekennzeichnet. Das hydraulische System des Schneidwerks 10 ist unterhalb der gestrichelten Linie 50 dargestellt und insgesamt mit dem Bezugszeichen 54 gekennzeichnet. Das hydraulische System 52 des Mähdreschers 14 umfasst ein Reservoir 56, eine Pumpe 58, variierbare Flussteiler 60 und ein Filter 62. Das hydraulische System 52 des Mähdreschers 14 kann auch weitere Komponenten umfassen. Das hydraulische System 52 des Mähdreschers 14 hat eine Schnittstelle mit dem hydraulischen System des Schneidwerks 54 durch ein Paar schnell abnehmbarer Kupplungen 64 und 66.

Unter Druck stehende Hydraulikflüssigkeit fließt vom Mähdrescher 14 durch die Kupplung 64 zum Antriebsmotor 70 der Haspel 26. Bei einem konventionellen Schneidwerk würde die vom Antriebsmotor 70 der Haspel 26 zurückkehrende Hydraulikflüssigkeit durch die Kupplung 66 wieder in den Mähdrescher 14 geleitet. Beim erfindungsgemäßen hydraulischen System 54 wird die vom Antriebsmotor 70 der Haspel 26 zurückkehrende Hydraulikflüssigkeit einer Verteilereinrichtung 72 zugeführt. Die Verteilereinrichtung 72 ist wiederum über eine Leitung 74 mit der schnell abnehmbaren Kupplung 66 verbunden.

Der Einlass der Fördergurtantriebspumpe 78 ist ebenfalls mit der Verteilereinrichtung 72 verbunden. Hydraulikflüssigkeit von der Fördergurtantriebspumpe 78 fließt durch einen verstellbaren Flussteiler 80 und dann zu drei in Reihe geschalteten Fördergurtantriebsmotoren 82, 84, 86. Hydraulikflüssigkeit vom Fördergurtantriebsmotor 86 wird zur Verteilereinrichtung 72 zurückgeführt. Das Schneidwerk 10 kann mehr oder weniger als drei Fördergurte aufweisen, und daher auch mehr oder weniger als drei Fördergurtantriebsmotoren aufweisen. Der vom verstellbaren Flussteiler 80 abgeleitete Fluss wird ebenfalls durch eine Leitung 88 zur Verteilereinrichtung 72 zurückgeführt. Der Fördergurtantriebsmotor 82 umfasst eine Gehäuseableitung (für Lecköl), die Hydraulikflüssigkeit ebenfalls zur Verteilereinrichtung 72 zurückführt. Abhängig von den Drücken der Motoren können die anderen Fördergurtantriebsmotore 84, 86 ebenfalls eine Gehäuseableitung aufweisen, die Hydraulikflüssigkeit zur Verteilereinrichtung 72 zurückführt.

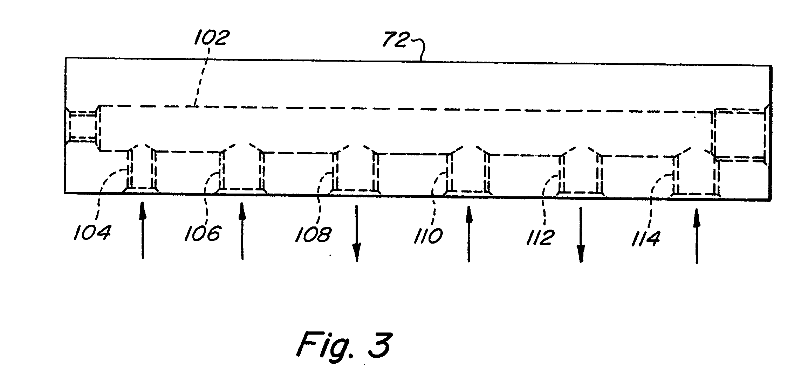

Die Fördergurtantriebspumpe 78 stellt den drei Fördergurtantriebsmotoren 82, 84, 86 einen gesteigerten Fluss der Hydraulikflüssigkeit (insbesondere Öl) bereit, um den Anforderungen dieser Motoren zu genügen. Die Größe der Fördergurtantriebsmotoren 82, 84, 86 ist durch die von den Fördergurten 28, 30, 32 getragene Last festgelegt. Abhängig von der Geschwindigkeit des Antriebsmotors 70 der Haspel 26, die vom Bediener des Mähdreschers 14 mittels des verstellbaren Flussteilers 60 geregelt wird, kann eine größere Flussrate durch die Fördergurtantriebsmotoren 82, 84, 86 erforderlich sein, als sie vom Antriebsmotor 70 der Haspel 26 geliefert wird. In diesem Fall wird ein Teil der Hydraulikflüssigkeit von der Verteilereinrichtung 72 wieder durch die Fördergurtantriebspumpe 78 und die Fördergurtantriebsmotoren 82, 84, 86 in den Kreislauf zurückgefördert. Um die Möglichkeit einer Hitzeansammlung im hydraulischen System 54 des Schneidwerks 10 zu vermeiden, ist die Verteilereinrichtung 72 so konfiguriert, dass die vom Antriebsmotor 70 der Haspel 26 kommende Hydraulikflüssigkeit vorrangig von der Fördergurtantriebspumpe 78 angesaugt wird. Das wird durch eine Konfiguration der Verteilereinrichtung 72 erreicht, wie sie im folgenden anhand der Figur 3 erläutert wird.

Die Verteilereinrichtung 72 hat eine durchgehende Bohrung 102, die an beiden Enden durch Stopfen verschlossen ist. Sechs quer verlaufende Bohrungen schneiden die durchgehende Bohrung 102 und bilden die sechs Anschlüsse der Verteilereinrichtung 78. Der Anschluss 104 ist der Rücklauf der Gehäuseableitung des Fördergurtantriebsmotors 82. Der Anschluss 106 ist der Rücklauf vom Antriebsmotor 70 der Haspel 26. Der Anschluss 108 ist ein Auslass zur Fördergurtantriebspumpe 78. Der Anschluss 110 ist der Rücklauf vom dritten Fördergurtantriebsmotor 86. Der Anschluss 112 ist der Rücklauf zum hydraulischen System 52 des Mähdreschers 14. Der Anschluss 114 ist der Rücklauf vom Flussteiler 80. Der Anschluss 106 mit dem Rücklauf vom Antriebsmotor 70 der Haspel und der zum Mähdrescher 14 führende Anschluss 112 sind die einzigen beiden Anschlüsse in der Verteilereinrichtung 72, die Hydraulikflüssigkeit mit dem Mähdrescher 14 austauschen und daher die Quelle für frische Hydraulikflüssigkeit bzw. Ausstoss für heiße Hydraulikflüssigkeit sind. Der Anschluss 106 für den Rücklauf des Antriebsmotors 70 der Haspel 26 ist derart angeordnet, dass die ihn durchströmende Hydraulikflüssigkeit auf ihrem Weg zurück zum Mähdrescher 14 führenden Anschluss 112 am zum Ansauganschluss der Fördergurtantriebspumpe 78 führenden Anschluss 108 vorbeiströmt. Da die Hydraulikflüssigkeit den Weg des geringsten Widerstands nehmen wird, wird sie von der Fördergurtantriebspumpe 78 angesaugt, anstelle zum Mähdrescher 14 zurückzukehren. Der Anschluss 114 des Flussteilers 80 ist derart angeordnet, dass die ihn durchströmende Hydraulikflüssigkeit auf ihrem Weg irgendwohin am Anschluss 112, der zum Mähdrescher 14 zurückführt, vorbeiströmt. Hydraulikflüssigkeit vom dritten Fördergurtantriebsmotor 86 wird zwischen einer Ansaugung durch die Fördergurtantriebspumpe 78 und dem Mähdrescher 14 aufgespalten, abhängig von der Flussrate des Antriebsmotors 70 der Haspel 26. Diese Aufspaltung muss die in die Verteilereinrichtung 72 hineinströmende Masse mit der aus ihr hinausströmenden Masse ausgleichen. Da immer Hydraulikflüssigkeit vom Antriebsmotor 70 der Haspel 26 zurückkehren wird, wird sie am Anschluss 108, der zur Fördergurtantriebspumpe 78 führt, vorbeiströmen, bevor sie den zum Mähdrescher 14 zurückführenden Anschluss 112 erreicht, und wird vorrangig den Bedarf der Fördergurtantriebspumpe 78 erfüllen. Nur wenn zusätzliches Öl für die Fördergurtantriebspumpe 78 benötigt wird, wird vom Fördergurtantriebsmotor 86 zurücklaufendes Öl in den Kreislauf zurückgeführt.

Anhand der Figur 2, auf die zurückverwiesen wird, ist erkennbar, dass der verstellbare Flussteiler 80 durch eine elektrische Betätigungseinrichtung 90 in Form eines Gleichstrommotors gesteuert wird. Die Betätigungseinrichtung wird durch einen Schalter 92 gesteuert, der vorzugsweise am Bedienerarbeitsplatz 16 des Mähdreschers 14 angeordnet ist. Dadurch wird eine Einstellung der Geschwindigkeit der Fördergurte 28, 30, 32 durch den Bediener des Mähdreschers 14 ermöglicht, ohne die Notwendigkeit, den Mähdrescher 14 anzuhalten und eine manuelle Einstellung eines am Schneidwerk angebrachten Flussteilers vorzunehmen.

Da der Gegendruck des Mähdreschers 14 auf die Fördergurtantriebspumpe 78 einwirkt, wird befürchtet, dass bei den meisten Getriebepumpen ein Wellendichtungsfehler auftritt. Um das zu vermeiden, wird ein Motor als Fördergurtantriebspumpe 78 benutzt. In einer bevorzugten Ausführungsform wird ein Motor "Geroler" der T-Serie der Fa. Eaton verwendet. Dieser Motor ist nicht in der Lage, Hydraulikflüssigkeit anzusaugen, jedoch stellt der Gegendruck diesen Dienst bereit. Der Motor der T-Serie wurde ausgewählt, da seine Wellendichtung dem erwarteten Gegendruck widerstehen kann. Die Fördergurtantriebspumpe 78 wird durch das Getriebe 40 des Schneidwerks 10 angetrieben.

Das erfindungsgemäße hydraulische System verwendet eine mit Hydraulikflüssigkeit vom existierenden Haspelantrieb versorgte Pumpe, um den notwendigen Fluss der Hydraulikflüssigkeit für die drei Fördergurtantriebsmotoren 82, 84, 86 bereitzustellen. Weder ist eine Änderung des hydraulischen Systems 52 des Mähdreschers 14 erforderlich, noch ein komplettes hydraulisches System, einschließlich eines Filters, Reservoirs und einer Kühleinrichtung des Schneidwerks. Die Fördergurtantriebspumpe 78 stellt den notwendigen Hydraulikflüssigkeitsfluss bereit, um die Fördergurtantriebsmotoren 82, 84, 86 anzutreiben. Dieser Fluss kann größer sein als der für den Antriebsmotor 70 der Haspel 26 erforderliche.

Das hydraulische System der vorliegenden Erfindung kann bei anderen Anwendungen an abnehmbaren Einrichtungen benutzt werden, bei denen zwei oder mehrere hydraulische Motoren verwendet werden und es gewünscht wird, mit einer einzigen Verbindung zum hydraulischen System eines Hauptantriebsgeräts auszukommen. Beispielsweise kann anstelle der Fördergurte eine Förderschnecke eines Schneidwerks mit einem Hydraulikmotor angetrieben werden, der mittels einer mechanisch vom Mähdrescher angetriebenen Pumpe mit unter Druck stehender Hydraulikflüssigkeit beaufschlagt wird.

## Patentansprüche

1. Gerät zum Anbau an ein Trägerfahrzeug, insbesondere Vorsatz für eine Erntemaschine, mit einem ersten hydraulischen Motor (70), der einen mit einem hydraulischen System (52) des Trägerfahrzeugs verbindbaren Einlass und einen Auslass aufweist, **dadurch gekennzeichnet, dass** der Auslass des ersten hydraulischen Motors (70) mit dem Einlass einer Pumpe (78) verbunden ist, und dass der Auslass der Pumpe (78) mit dem Einlass eines zweiten hydraulischen Motors (82) verbunden ist.

2. Gerät nach Anspruch 1, **dadurch gekennzeichnet, dass** der Auslass des zweiten hydraulischen Motors (82) zumindest indirekt mit einem Rücklaufanschluss verbunden ist, der mit dem Trägerfahrzeug verbindbar ist, und/oder mit dem Einlass der Pumpe (78) verbunden ist.

3. Gerät nach Anspruch 1 oder 2, **gekennzeichnet durch** eine Verteilereinrichtung (72), die einen mit dem Auslass des ersten hydraulischen Motors (70) verbundenen Anschluss (106), einen mit dem Einlass der Pumpe (78) verbundenen Anschluss (108), einen mit dem Auslass des zweiten hydraulischen Motors (82, 84, 86) verbundenen Anschluss (110) und einen mit dem Rücklaufanschluss des hydraulischen Systems (52) des Trägerfahrzeugs verbindbaren Anschluss (112) aufweist.

4. Gerät nach Anspruch 1, 2 oder 3, **gekennzeichnet durch** eine Mehrzahl zweiter hydraulischer Motore (82, 84, 86), die **durch** die Pumpe (78) mit Hydraulikflüssigkeit beaufschlagt werden und vorzugsweise in Serie geschaltet sind.

5. Gerät nach einem der vorhergehenden Ansprüche, **gekennzeichnet durch** einen verstellbaren Flussteiler (80), mit dem die Menge dem zweiten hydraulischen Motor (82) zugeführter Hydraulikflüssigkeit einstellbar ist.

6. Gerät nach Anspruch 5, **dadurch gekennzeichnet, dass** überschüssige Hydraulikflüssigkeit vom Flussteiler (80) der Verteilereinrichtung (72) zurückgeführt wird.

7. Gerät nach Anspruch 5 oder 6, **dadurch gekennzeichnet, dass** der Flussteiler (80) insbesondere elektrisch fernsteuerbar ist.

8. Gerät nach Anspruch 7, **dadurch gekennzeichnet, dass** der Flussteiler (80) vom Trägerfahrzeug aus fernsteuerbar ist.

9. Gerät nach einem der Ansprüche 3 bis 8, **dadurch gekennzeichnet, dass** der mit dem Einlass der Pumpe (78) verbundene Anschluss (108) der Verteilereinrichtung (72) zwischen dem mit dem Auslass des ersten hydraulischen Motors (70) verbundenen Anschluss (106) und dem mit dem Rücklaufanschluss des hydraulischen Systems (52) des Trägerfahrzeugs verbindbaren Anschluss (112) liegt, so dass vom ersten hydraulischen Motor (70) kommende Hydraulikflüssigkeit am Anschluss (108) der Pumpe (78) vorbeiströmt, bevor sie den zum Trägerfahrzeug zurückführenden Anschluss (112) erreicht.

10. Gerät nach einem der vorhergehenden Ansprüche, **dadurch gekennzeichnet, dass** der erste hydraulische Motor (70) eingerichtet ist, eine Haspel (26) in Drehung zu versetzen.

11. Gerät nach einem der vorhergehenden Ansprüche, **dadurch gekennzeichnet, dass** der zweite hydraulische Motor (82) eingerichtet ist, einen Fördergurt (28, 30, 32) anzutreiben.

12. Gerät nach einem der vorhergehenden Ansprüche, **dadurch gekennzeichnet, dass** die Pumpe (78) mechanisch durch das Trägerfahrzeug angetrieben wird.

13. Erntemaschine, insbesondere Mähdrescher (14), mit einem Gerät, vorzugsweise einem Schneidwerk (10), nach einem der vorhergehenden Ansprüche.

## Claims

1. An implement for attachment to a carrying vehicle, especially a header for a harvesting machine, with a first hydraulic motor (70) which has an inlet and an outlet which can be connected to a hydraulic system (52) of the carrying vehicle, **characterized in that** the outlet of the first hydraulic motor (70) is connected to the inlet of a pump (78) and **in that** the outlet of the pump (78) is connected to the input of a second hydraulic motor (82).

2. An implement according to claim 1, **characterized in that** the outlet of the second hydraulic motor (82) is connected at least indirectly to a return port which can be connected to the carrying vehicle, and/or is connected to the inlet of the pump (78).

3. An implement according to claim 1 or 2, **characterized by** a manifold device (72) which comprises a port (106) connected to the outlet of the first hydraulic motor (70), a port (108) connected to the inlet of the pump (78), a port (110) connected to the outlet of the second hydraulic motor (82, 84, 86) and a port (112) which can be connected to the return port of the hydraulic system (52) of the carrying vehicle.

4. An implement according to claim 1, 2 or 3, **characterized by** a plurality of second hydraulic motors (82, 84, 86) which are supplied with hydraulic fluid by the pump (78) and are preferably connected in series.

5. An implement according to any of the preceding claims, **characterized by** an adjustable flow divider (80) with which the amount of hydraulic fluid fed to the second hydraulic motor (82) can be adjusted.

6. An implement according to claim 5, **characterized in that** excess hydraulic fluid from the flow divider (80) is fed back to the manifold device (72).

7. An implement according to claim 5 or 6, **characterized in that** the flow divider (80) can be remote controlled, especially electrically.

8. An implement according to claim 7, **characterized in that** the flow divider (80) can be remote controlled from the carrying vehicle.

9. An implement according to any of claims 3 to 8, **characterized in that** the port (108) of the manifold device (72) connected to the inlet of the pump (78) lies between the port (106) connected to the outlet of the first hydraulic motor (70) and the port (112) which can be connected to the return port of the hydraulic system (52) of the carrying vehicle, so that hydraulic fluid coming from the first hydraulic motor (70) flows past the pump (78) at the port (108), before it reaches the port (112) feeding back to the carrying vehicle.

10. An implement according to any of the preceding claims, **characterized in that** the first hydraulic motor (70) is arranged to rotate a reel (26).

11. An implement according to any of the preceding claims, **characterized in that** the second hydraulic motor (82) is arranged to drive a conveyor belt (28, 30, 32).

12. An implement according to any of the preceding claims, **characterized in that** the pump (78) is driven mechanically by the carrying vehicle.

13. A harvesting machine, especially a combine harvester (14) with an implement, preferably a cutter-head (10), according to any ofthe preceding claims.

## Revendications

1. Appareil pour le montage sur véhicule de support, en particulier prévu pour une moissonneuse, comportant un premier moteur hydraulique (70), qui présente une entrée reliable avec un système hydraulique (52) du véhicule de support et une sortie, **caractérisé en ce que** la sortie du premier moteur hydraulique (70) est reliée avec l'entrée d'une pompe (78) et que la sortie de la pompe (78) est reliée avec l'entrée d'un second moteur hydraulique (82).

2. Appareil selon la revendication 1, **caractérisé en ce que** la sortie du second moteur hydraulique (82) est reliée au moins indirectement avec un raccordement de retour, lequel est reliable avec le véhicule de support, et/ou est relié avec l'entrée de la pompe (78).

3. Appareil selon la revendication 1 ou 2, **caractérisé par** un dispositif de distribution (72) qui présente un raccordement (106) relié avec la sortie du premier moteur hydraulique (70, un raccordement (108) relié avec l'entrée de la pompe (78), un raccordement relié avec la sortie du second moteur hydraulique (82, 84, 86), et un raccordement (112) reliable avec le raccordement de retour du système hydraulique (52) du véhicule de support.

4. Appareil selon la revendication 1, 2 ou 3, **caractérisé par** une pluralité de seconds moteurs hydrauliques (82, 84, 86) qui sont alimentés en fluide hydraulique par la pompe (78) et sont montés de préférence en série.

5. Appareil selon l'une des revendications précédentes, **caractérisé par** un répartiteur de flux (80) réglable, par lequel la quantité de fluide hydraulique amenée au second moteur hydraulique (82) est réglable.

6. Appareil selon la revendication 5, **caractérisé en ce que** le fluide hydraulique excédentaire est ramené, par le répartiteur de flux (80), au dispositif de distribution (72).

7. Appareil selon la revendication 5 ou 6, **caractérisé en ce que** le répartiteur de flux (80) peut être commandé à distance, en particulier de façon électrique.

8. Appareil selon la revendication 7, **caractérisé en ce que** le répartiteur de flux (80) peut être commandé à distance à partir du véhicule de support.

9. Appareil selon l'une des revendications 3 à 8, **caractérisé en ce que** le raccordement (108), relié avec l'entrée de la pompe (78), du dispositif de distribution (72) est situé entre le raccordement (106) relié avec la sortie du premier moteur hydraulique (70) et le raccordement (112) reliable avec le raccordement de retour du système hydraulique (52) du véhicule de support, si bien que le fluide hydraulique venant du premier moteur hydraulique (70) s'écoule le long du raccordement (108) de la pompe (78) avant d'atteindre le raccordement (112) ramenant au véhicule de support.

10. Appareil selon l'une des revendications précédentes, **caractérisé en ce que** le premier moteur hydraulique (70) est agencé pour mettre un treuil (26) en rotation.

11. Appareil selon l'une des revendications précédentes, **caractérisé en ce que** le second moteur hydraulique (82) est agencé pour entraîner un produit à transporter (28, 30, 32).

12. Appareil selon l'une des revendications précédentes, **caractérisé en ce que** la pompe (78) est entraînée mécaniquement par le véhicule de support.

13. Moissonneuse, en particulier moissonneuse-batteuse (14), comportant un appareil, de préférence un mécanisme de coupe (10), selon l'une des revendications précédentes.
